# EUROPÄISCHE PATENTSCHRIFT

(11) **EP 0 534 163 B1**
(45) Veröffentlichungstag und Bekanntmachung des Hinweises auf die Patenterteilung: **24.04.1996**
(21) Anmeldenummer: 92114714.6
(22) Anmeldetag: 28.08.1992
(51) Int. Cl.: F16N 25/02

(54) **Progressivverteiler für Schmierstoffe**
Progressive distributor for lubricant
Distributeur progressif pour lubrifiant

(30) Priorität: 26.09.1991 DE 9112030 U
(43) Veröffentlichungstag der Anmeldung: 31.03.1993
(73) Patentinhaber: BAIER & KÖPPEL GMBH & CO. Präzisionsapparate, D-91257 Pegnitz (DE)
(72) Erfinder: Pingel, Hans, W-8570 Pegnitz (DE)
(74) Vertreter: Richter, Bernhard, Dipl.-Ing.

(56) Entgegenhaltungen:
- DE-B- 1 156 482
- GB-A- 1 105 176
- GB-A- 1 160 336
- GB-A- 1 265 947
- DropsA, Modul-Progressivverteiler der zweiten Generation SM0-SMX, 9/87
- EUGEN WOERNER GmbH & Co, Zentralschmieranlagen, Druckblatt Nr. 0094.07.85, Wertheim

## Beschreibung

Die Erfindung betrifft einen Progressivverteiler für Schmierstoffe, insbesondere zum Einsatz in Zentralschmieranlagen, mit einer Reihe von Dosierelementen und mit einer Grundplatte, die aus einzelnen Zuführelementen oder -abschnitten besteht, wobei die Zuführelemente oder -abschnitte mit Öffnungen und Leitungen für die Zufuhr des Schmierstoffes zu den Dosierelementen versehen sind (Oberbegriff des Anspruches 1). Bei derartigen Progressivverteilern steuert der zur jeweiligen Schmierstelle zu bringende Schmierstoff seinen Auslaß oder seine Förderung über Kolben, die in den Dosierelementen des Progressivverteilers vorgesehen sind und deren Verschiebung vom Schmiermittel betätigt wird. Insbesondere werden derartige Progressivverteiler in Zentralschmieranlagen eingesetzt. Ein Progressivverteiler gemäß dem Oberbegriff des Anspruches 1 ist beispielsweise aus einem Prospekt der Firma DROPSA S.P.A./Mailand "Modul-Progressivverteiler der zweiten Generation SMO-SMX" bekannt. Es ist eine Anzahl der Dosierelemente (auch Module genannt) vorgesehen. Jedes Dosierelement ist für sich auf einer sogenannten Grundplatte lösbar angeschraubt, wobei die Grundplatte selber aus einzelnen Elementen zusammengesetzt ist und die Aufgabe hat, die Schmierstoffe zu den Modulen bzw. Dosierelementen hinzuführen und von dort wieder rückgeführten oder freigegebenen Schmierstoff den betreffenden Auslässen zuzuführen. Hierbei können zwar die Dosierelemente je für sich von der Grundplatte gelöst und gegen ein entsprechendes, neues Dosierelement ausgetauscht werden, wobei die dazugehörigen Rohrleitungen nicht zu lösen sind. Nachteilig ist aber, daß in bestimmten Fällen eines Defektes des Progressivverteilers man nicht ohne weiteres und vor allen Dingen nicht vor Ort herausfinden kann, welches der Dosierelemente defekt ist und damit ursächlich für den betreffenden Ausfall oder die betreffende Störung ist. Um dies herauszufinden muß man sämtliche Dosierelemente für sich abschrauben und zur Werkstatt bringen, sowie vor Ort eine entsprechende Anzahl neuer Dosierelemente auf die Grundplatte anschrauben. Dies ist umständlich und erfordert erhebliche Montagearbeiten vor Ort, die erfahrungsgemäß besonders zeitaufwendig und damit entsprechend teuer sind. Lediglich in solchen Fällen, in denen man vor Ort bereits weiß, welches Dosierelement ausgewechselt werden muß, z.B. bei einer gezielten Änderung der Schmiermittelförderung durch ein anderes Dosierelement, ist der vorstehend erläuterte Aufwand nicht notwendig, sondern man kann gezielt das betreffende Dosierelement abschrauben und durch das neue Dosierelement ersetzen.

Aus dem Prospekt "Zentralschmieranlagen" Druckblatt Nr. 0094.07.85 einer Firma EUGEN WOERNER GmbH & Co. in D-6980 Wertheim ist ein Progressivverteiler bekannt, bei dem auf einer Grundplatte ein Blockverteiler lösbar angeschraubt ist, der vom Prinzip her die gleiche Funktion erfüllt wie die o.g. Dosierelemente, wobei jedoch dieser Blockverteiler eine bauliche Einheit bildet, die nur im ganzen an die Grundplatte angeschraubt bzw. von dieser gelöst werden kann. Im Falle eines Defektes ist der gesamte Blockverteiler von der Grundplatte abzuschrauben. Hiermit kann man zwar, falls ein vor Ort nicht zu lokalisierender Fehler auftritt, den gesamten Blockverteiler zur Untersuchung einer Fehlerquelle in die Werkstatt bringen und währenddessen einen anderen Blockverteiler vor Ort einsetzen. In Fällen aber, in denen gezielt nur ein Teilbereich des gesamten Blockverteilers ausgewechselt werden müßte, z.B. wegen der oben erwähnten Änderung der Förderung, ist dies nur auf dem Wege möglich, daß ein neuer Blockverteiler eingebaut wird, der an der betreffenden Stelle die gewünschte Änderung aufweist. Hiermit ergeben sich durch den Einsatz eines neuen Blockverteilers erhebliche Gerätekosten.

Aus GB-A-1 265 947 ist ein Progressivverteiler für Schmierstoffe, insbesondere zum Einsatz in Zentralschmieranlagen bekannt, der eine Reihe von Dosierelementen und eine Grundplatte besitzt. Dabei ist zwischen jedem Dosierelement und der Grundplatte eine der Abdichtung dienende Platte vorgesehen, deren Außenabmessungen denen des Dosierelementes entsprechen. Das betreffende Dosierelement und die zugehörige Zwischenplatte sind zusammen mit denselben Verbindungsschrauben an der Grundplatte zu befestigen, bzw. nach Entfernen der Schrauben auch nur zusammen wieder von der Grundplatte zu lösen.

Die Aufgabe der Erfindung besteht demgegenüber darin, einen Progressivverteiler gemäß dem Oberbegriff des Anspruches 1 dahingehend zu verbessern, daß man mit möglichst geringem Geräte- und Montageaufwand den in der Praxis vorkommenden Anforderungen der Auswechselung von Dosierteilen gerecht werden kann.

Die Lösung dieser Aufgabe wird zunächst, ausgehend vom Oberbegriff des Anspruches 1, darin gesehen, daß sich zwischen den Dosierelementen und der Grundplatte eine, diese Dosierelemente tragende Zwischenplatte befindet, daß die Dosierelemente je für sich mit der Zwischenplatte lösbar verbunden, bevorzugt verschraubt sind, daß die Zwischenplatte mit der Grundplatte lösbar verbunden bevorzugt verschraubt, ist und daß für die Verbindung der Dosierelemente mit der Zwischenplatte einerseits und die Verbindung der Zwischenplatte mit der Grundplatte andererseits von einander unabhängige Verbindungsmittel, bevorzugt Verschraubungen vorgesehen sind (Kennzeichens des Anspruches 1). Der bauliche Mehraufwand in Form der Zwischenplatte fällt sowohl bei der Montage, als auch vom Geräteaufwand her nicht ins Gewicht. Die Zwischenplatte und die voneinander unabhängigen Verbindungsmittel bieten aber erhebliche Erleichterungen bei der Montage. Besteht die Anforderung, sämtliche Dosierelemente auf einmal von der Grundplatte zu entfernen, so muß man dann lediglich die diese Dosierelemente tragende Zwischenplatte von der Grundplatte lösen und kann dann die Zwischenplatte mit sämtlichen Dosierelementen in eine Werkstatt bringen (falls erforderlich). Eine neue Zwischenplatte mit daran befestigten neuen Dosierelementen wird auf die vorhandene Grundplatte aufgeschraubt. Besteht dagegen nur die Anforderung, gezielt ein einzelnes Dosierelement zu entfernen und durch ein neues zu ersetzen, so hat der Monteur lediglich dieses einzelne Dosierelement von der Zwischenplatte abzuschrauben und das neue Dosierelement auf der Zwischenplatte anzuschrauben. Der Ersatz eines defekten Blockes einzelner Dosierelemente durch einen neuen, werkstattgeprüften Block derartiger Elemente, oder auch der Ersatz eines einzelnen Dosierelementes durch ein anderes Dosierelement kann somit vor Ort sehr schnell ohne ins Gewicht fallenden Montageaufwand erfolgen. In der Werkstatt hat man nicht nur die Zeit, sondern vor allem auch die Hilfsmittel, um eine Fehlersuche, Reparatur oder dergleichen durchzuführen.

Die vorstehend beschriebenen unterschiedlichen Montagemöglichkeiten sind bei dem Progressivverteiler nach GB-A-1265 947 nicht erreichbar, da dort keine gemeinsame Zwischenplatte für den Halt sämtlicher Progressivverteiler vorgesehen ist und da ferner aufgrund der von den Dosierelementen über die Abdichtplatte zur Grundplatte durchgehenden Schraubverbindungen weder eine separate Entfernung der Dosierelemente von der jeweiligen Abdichtplatte noch eine separate Entfernung einer Einheit aus Abdichtplatte und Dosierelement von der Grundplatte möglich ist.

Falls erwünscht und vor allem wenn Raumknappheit besteht, kann gemäß den Merkmalen des Anspruches 2 vorgesehen sein, daß die Zwischenplatte Steuer- und Zuführleitungen für das Schmiermittel aufweist, wobei diese Leitungen sowohl mit in der Grundplatte vorgesehenen Zu- und Ableitungen des Schmiermittels, als auch mit Ein- und Ausgangsöffnungen der Dosierelemente verbunden, bzw. verbindbar sind.

Ferner sind gemäß Anspruch 3 noch Prüfschrauben zur Blockadeprüfung bei einem Schmierleitungsverschluß vorgesehen.

Weitere Vorteile und Merkmale der Erfindung sind der nachstehenden Beschreibung und der zugehörigen Zeichnung von erfindungsgemäßen Ausführungmöglichkeiten zu entnehmen. In der Zeichnung zeigt:
- Fig. 1:: einen Progressivverteiler nach der Erfindung in der Seitenansicht,
- Fig. 2:: die zu Fig. 1 gehörende Stirnansicht,
- Fig. 3:: die zu Fig. 1 gehörende Draufsicht,
- Fig. 4:: eine abgewandelte Ausführungsform der Erfindung in der Seitenansicht mit eingezeichneten Leitungen und dergleichen,
- Fig. 5:: einen Schnitt gemäß der Linie V - V in Fig. 4.
- Fig. 6:: eine weitere Ausführungsform der Erfindung in einem Schnitt entsprechend Fig. 5,
- Fig. 7:: eine Draufsicht auf Fig. 6.

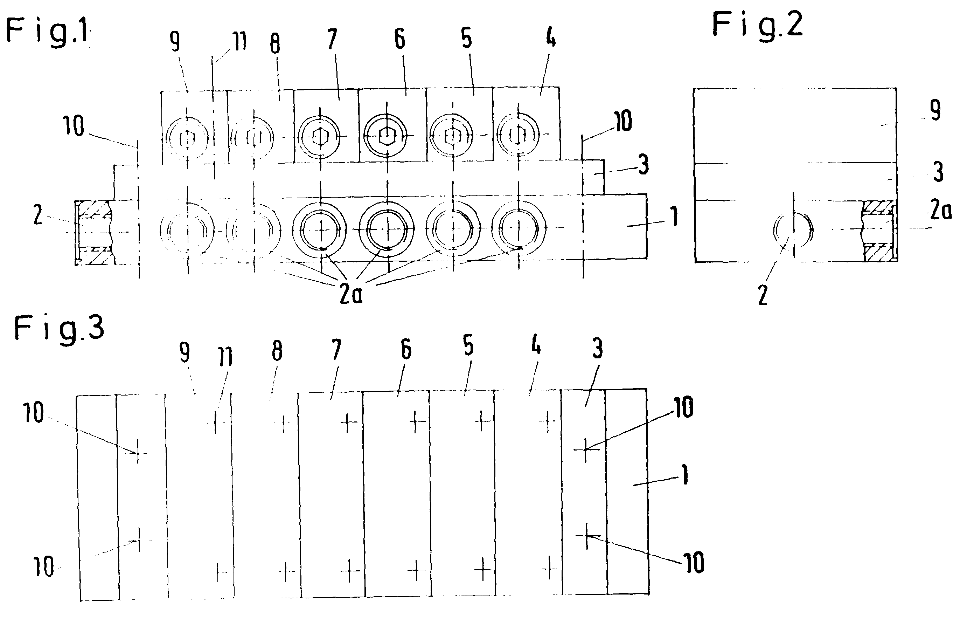

Der Progressivverteiler besteht gemäß Fig. 1 aus einer Grundplatte 1 mit Anschlüssen 2 für die Zuleitungen und 2a für die Ableitungen, einer mit der Grundplatte 1 verschraubbaren Zwischenplatte 3 und einer Reihe von Dosierelementen 4 bis 9, die je für sich mit der Zwischenplatte 3 verschraubbar sind. Somit besteht eine lösbare Verbindung zwischen Grundplatte 1 und Zwischenplatte 3, sowie zwischen der Zwischenplatte 3 und jedem der Dosierelemente 4 bis 9. Die Grundplatte 1 besitzt einzelne Zuführelemente oder -abschnitte mit den o.g. Anschlüssen 2 und 2a. Hiervon wird das Schmiermittel den Dosierelementen zugeführt bzw. zurückfließendes Schmiermittel abgeführt.

Die lösbare Schraubbefestigung der Zwischenplatte 3 an der Grundplatte 1 ist strichpunktiert mit Ziffer 10 angedeutet, während die lösbare Verschraubung der Dosierelemente 4 bis 9 mit der Zwischenplatte 3 anhand der Ziffer 11 beim Dosierelement 9 prinzipiell dargestellt ist.

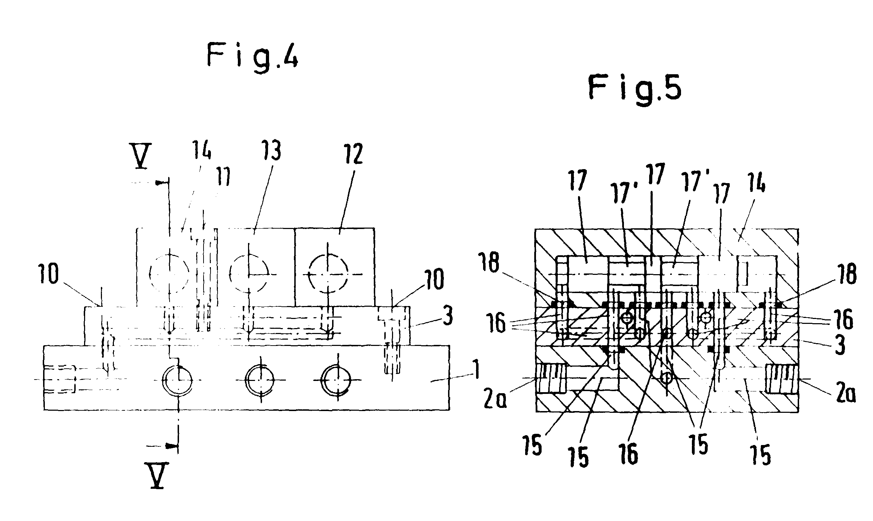

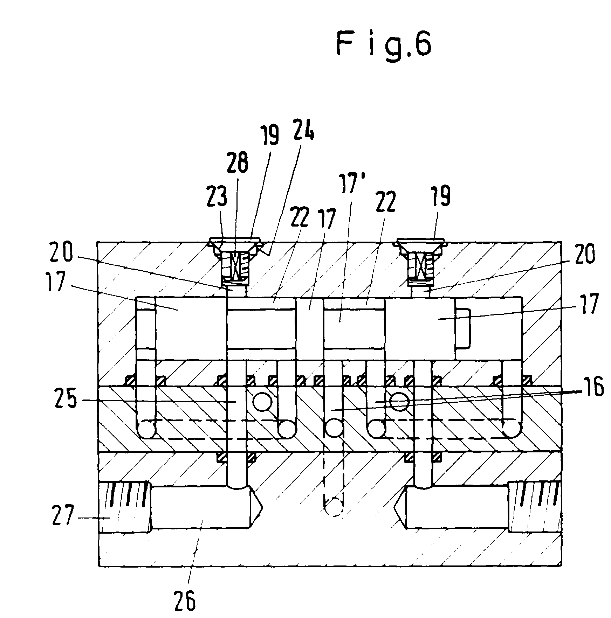

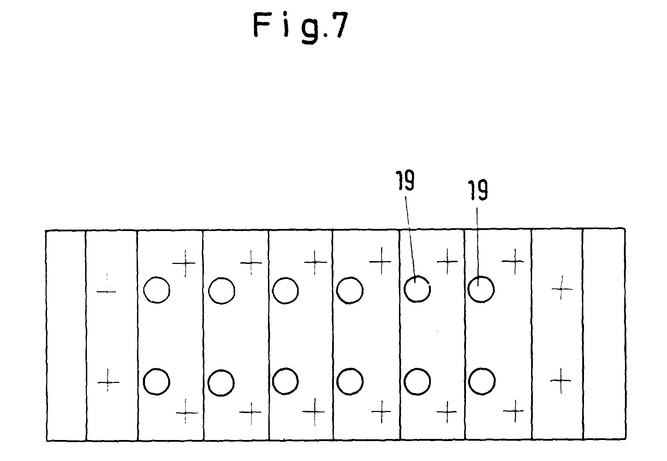

Die Fig. 4 und 5 zeigen in einer abgewandelten Ausführungsform einige Dosierelemente 12, 13, 14 mit Schraubbefestigung 11 an der Zwischenplatte 3 und die Grundplatte 1. Ferner sind die Anschlüsse 2 und 2a in der Grundplatte 1, deren Zuund Ableitungen 15 zur Zwischenplatte 3, innerhalb der Zwischenplatte 3 mehrere Leitungen 16, die zu Ein- oder Ausgangsöffnungen 18 des Dosierelementes 14 führen, sowie innerhalb des Dosierelementes 14 die Kolben 17 dargestellt. Derartige Kolbensteuerungen von Progressivverteilern (in Englisch: progressiv distributors) sind aus dem Stand der Technik bekannt. Im übrigen wird hierzu auf die nachfolgenden Erläuterungen einer weiteren Ausführungsmöglichkeit der Erfindung verwiesen, die in Fig. 6 und 7 dargestellt ist.

Das vorgenannte Ausführungsbeispiel der Fig. 6 und 7 zeigt eine Dosierkolbenanordnung mit mehreren Kolbenbereichen 17, die durch Abschnitte 17' geringeren Durchmessers miteinander verbunden sind. Hierdurch werden Steuerungskanäle 22 gebildet, welche in Form eines ringzylindrischen Raumes die Abschnitte 17' umgeben. Diese in ihrem Querschnitt ringzylindrischen Steuerungskanäle 22 können zunächst die Leitungen 16 (siehe Fig. 5) wie üblich miteinander verbinden.

Bei einer verschlossenen Schmierstellenleitung, beispielsweise aufgrund einer Quetschung der Rohrleitung oder einer Schmierstelle ohne Durchgang, müssen üblicherweise alle vom Progressivverteiler abgehenden Schmierstellenleitungen gelöst werden, bis die verschlossene Leitung gefunden ist und der Progressivverteiler wieder funktionsfähig ist. Gemäß Fig. 6 und 7 sind Prüfschrauben 19 mit einem jeweils dazugehörigen Auslaß 20 am Progressivverteiler vorgesehen. Hiermit kann das vorstehend erläuterte, umständliche Lösen der Schmierstellenleitungen entfallen. Die Funktion ist derart, daß im Fall einer blockierten Schmierstellenleitung sich bei entsprechender Kolbenstellung innerhalb des Steuerungskanales 22 ein Druck aufbaut, welcher die Folgesteuerungen des Progressivverteilers beeinträchtigt oder sogar stillsetzt. Werden nun nacheinander die Prüfschrauben 19 geöffnet, so wird über den Auslaß 20, welcher mit der blockierten Schmiermittelleitung in Verbindung steht, durch den aufgebauten Druck des Steuerungskanales 22 Schmiermittel aus der zu dem betreffenden Auslaß gehörenden, soeben geöffneten Prüfschraube nach außen gedrückt. Da jede Prüfschraube einer entsprechenden Schmierstellenleitung zugeordnet ist, hat man hiermit ein sicheres Indiz, welche Schmierstellenleitung blockiert ist und kann diese dann überprüfen und gegebenenfalls auswechseln. Es tritt dann wieder die normale Funktion des Progressivverteilers ein. Im vorstehenden Zusammenhang ist darauf hinzuweisen, daß jeder Auslaß 20 mit einem Kanal 25 verbunden ist, der mit der Leitung 16 der Fig. 5 identisch ist. Dieser Kanal 25 setzt sich in der Bohrung 26 fort und führt zum Anschluß 27 der dazugehörigen Schmiermittelleitung.

Die Prüfschraube 19 kann verschieden, beispielsweise mit einem Innensechskant, als Schlitzschraube oder als Rändelschraube ausgeführt sein. Im vorliegenden Beispiel besitzt sie eine sich konisch in Einschraubrichtung verjüngende Dichtfläche 23, die an einer Dichtkante 24 anliegt. In der Regel sind die Prüfschraube mit einer sogenannten Abflächung 28 versehen, die schon bei einer halben Umdrehung der Prüfschraube den Abfluß des Schmierstoffes freigibt. Derartige Prüfschrauben sind für sich zwar bekannt, nicht aber im Zusammenhang mit den übrigen Merkmalen der Erfindung.

## Patentansprüche

1. Progressivverteiler für Schmierstoffe, insbesondere zum Einsatz in Zentralschmieranlagen, mit einer Reihe von Dosierelementen und mit einer Grundplatte, die aus einzelnen Zuführelementen oder -abschnitten besteht, wobei die Zuführelemente oder -abschnitte mit Öffnungen und Leitungen für die Zufuhr des Schmierstoffes zu den Dosierelementen versehen sind, dadurch gekennzeichnet, daß sich zwischen den Dosierelementen (4 bis 9, 12 bis 14) und der Grundplatte (1) eine diese Dosierelemente tragende Zwischenplatte (3) befindet, daß die Dosierelemente je für sich mit der Zwischenplatte lösbar verbunden, bevorzugt verschraubt sind daß die Zwischenplatte mit der Grundplatte lösbar verbunden, bevorzugt verschraubt, ist und daß für die Verbindung der Dosierelemente mit der Zwischenplatte einerseits und die Verbindung der Zwischenplatte mit der Grundplatte andererseits voneinander unabhängige Verbindungsmittel, bevorzugt Verschraubungen (10, 11) vorgesehen sind.

2. Progressivverteiler nach Anspruch 1, dadurch gekennzeichnet, daß die Zwischenplatte (3) Steuer- und Zuführleitungen (16) für das Schmiermittel aufweist, wobei diese Leitungen sowohl mit in der Grundplatte vorgesehenen Zu- und Ableitungen (15) des Schmiermittels, als auch mit Ein- und Ausgangsöffnungen (18) der Dosierelemente verbunden, bzw. verbindbar sind.

3. Progressivverteiler nach Anspruch 1 oder 2, dadurch gekennzeichnet, daß die Dosierelemente (12-14) mit von ihnen lösbaren Prüfschrauben (19) versehen sind, die über je einen Auslaß (20) zu je einem Kanal (25) führen, an dessen Austrittsende sich der Anschluß (26) für die betreffende Schmierstellenleitung befindet.

## Claims

1. Progressive distributor for lubricants, in particular for use in central lubrication systems, having a series of dispensing elements and having a base plate which comprises individual feed elements or feed segments, wherein the feed elements or feed segments are provided with apertures and lines for the supply of the lubricant to the dispensing elements, characterized in that an intermediate plate (3) which supports said dispensing elements is disposed between the dispensing elements (4 to 9, 12 to 14) and the base plate (1), in that the dispensing elements are each separately joined, preferably screwed, detachably to the intermediate plate, in that the intermediate plate is joined, preferably screwed, detachably to the base plate, and in that mutually independent joining means, preferably screw joints (10, 11), are provided for the joining of the dispensing elements to the intermediate plate, on the one hand, and the joining of the intermediate plate to the base plate, on the other hand.

2. Progressive distributor according to Claim 1, characterized in that the intermediate plate (3) has control and feed lines (16) for the lubricant, wherein said lines are joined, or are joinable, both to delivery and drain lines (15) of the lubricant provided in the base plate and to inlet and outlet apertures (18) of the dispensing elements.

3. Progressive distributor according to Claim 1 or 2, characterized in that the dispensing elements (12 - 14) are provided with test screws (19) which can be detached from them and which in each case lead via an outlet (20) to a respective channel (25), at the discharge end of which the connection (26) for the respective lubricating point line is disposed.

## Revendications

1. Distributeur progressif pour lubrifiants, à utiliser notamment dans des installaticns de graissage centralisé, avec une rangée d'éléments doseurs et avec une plaque de base qui est constituée d'éléments ou segments individuels d'alimentation, les éléments ou segments d'alimentation étant pourvus d'ouvertures et de conduites pour l'apport du lubrifiant aux éléments doseurs, **caractérisé** en ce qu'une plaque intermédiaire (3) portant les éléments doseurs (4 à 9, 12 à 14) se trouve entre ces éléments doseurs et la plaque de base (1), en ce que les éléments doseurs sont individuellement assemblés de façon amovible à la plaque intermédiaire, de préférence par vis, en ce que la plaque intermédiaire est assemblée de façon amovible à la plaque de base, de préférence par vis, et en ce que des moyens d'assemblage indépendants les uns des autres, de préférence des assemblages par vis (10, 11), sont prévus d'une part pour l'assemblage des éléments doseurs avec la plaque intermédiaire, et d'autre part pour l'assemblage de la plaque intermédiaire avec la plaque de base.

2. Distributeur progressif selon la revendication 1, **caractérisé** en ce que la plaque intermédiaire (3) présente des conduites de commande et d'alimentation (16) pour le lubrifiant, ces conduites étant reliées, ou pouvant être reliées, tant à des conduites (15) d'amenée et d'évacuation du lubrifiant prévues dans la plaque de base, qu'à des ouvertures (18) d'entrée et de sortie des éléments doseurs.

3. Distributeur progressif selon la revendication 1 ou 2, **caractérisé** en ce que les éléments doseurs (12 à 14) sont pourvus de vis de contrôle (19), qui peuvent être déposées de ces éléments et qui mènent par l'intermédiaire d'une évacuation respective (20) à un canal respectif (25), à l'extrémité de sortie duquel se trouve le branchement (26) pour la conduite de graissage concernée.
